Europäisches Patentamt

**European Patent Office**

Office européen des brevets

(11) Veröffentlichungsnummer: **0 010 263**
**B1**

(12) **EUROPÄISCHE PATENTSCHRIFT**

(45) Veröffentlichungstag der Patentschrift:
02.03.83

(51) Int. Cl.³: **G 06 F 13/00**, G 06 F 9/36

(21) Anmeldenummer: **79103913.4**

(22) Anmeldetag: **11.10.79**

(54) Verfahren und Schaltungsanordnung zur Erweiterung des Adressierungsvolumens einer Zentraleinheit, insbesondere eines Mikroprozessors.

(30) Priorität: **23.10.78 DE 2846054**

(43) Veröffentlichungstag der Anmeldung:
**30.04.80 Patentblatt 80/9**

(45) Bekanntmachung des Hinweises auf die Patenterteilung:
**02.03.83 Patentblatt 83/9**

(84) Benannte Vertragsstaaten:
**AT BE CH FR GB IT LU NL SE**

(56) Entgegenhaltungen:
**DE-A-2 556 661**
**FR-A-1 567 705**
**ELECTRONICS, Band 49, Nr. 26,**
**23. Dezember 1976, New York, US, RAPHAEL:**
**»How to expand a micro-computer's memory«,**
**Seiten 67—69**
**IBM TECHNICAL DISCLOSURE BULLETIN,**
**Band 17, Nr. 4, September 1974,**
**New York, US, BETTLE:**
**»Extended addressing system«,**
**Seiten 1153—1154**

(73) Patentinhaber: **SIEMENS AKTIENGESELLSCHAFT,**
**Berlin und München Wittelsbacherplatz 2,**
**D-8000 München 2 (DE)**

(72) Erfinder: **Sattler, Walter, Dipl.-Ing.,**
**Pössenbacherstrasse 3a, D-8000 München 71 (DE)**

## Verfahren und Schaltungsanordnung zur Erweiterung des Adressierungsvolumens einer Zentraleinheit, insbesondere eines Mikroprozessors

Die Erfindung bezieht sich auf ein Verfahren und auf eine Schaltungsanordnung zur Erweiterung des Adressierungsvolumens einer Zentraleinheit, insbesondere eines Mikroprozessors, über den durch den Adressenvorrat eines vorgesehenen Befehlszählers gegebenen Grundadressenumfang hinaus, wobei zumindest eine Grundadresse der Zentraleinheit dazu herangezogen wird, die Abgabe zusätzlicher Adreßbits zu bewirken, aus denen zusammen mit den Adreßbits der betreffenden Grundadresse eine Erweiterungsadresse gebildet wird.

Es ist bereits eine Schaltungsanordnung bekannt (DE-A-2 556 661), bei der zu erweiternde Adressen von einem Programmzähler oder von einem Rechenwerk einem Adreßregister zugeführt werden. Die in diesem Adreßregister jeweils befindliche Adresse wird dann mittels eines Komparators mit einer fest vorgegebenen Adresse verglichen, die in einem Konstant-Generator enthalten ist. Bei Ermittlung einer Übereinstimmung der so miteinander verglichenen Größen gibt der Komparator ein Ausgangssignal ab, durch welches ein UND-Glied in den übertragungsfähigen Zustand gesteuert wird. Über dieses UND-Glied wird dann eine Erweiterungsadresse aus einem Adressenerweiterungsregister abgegeben. Die betreffende Erweiterungsadresse wird dann mit der in dem Adreßregister enthaltenen Adresse zu einer Kombinationsadresse zusammengefaßt, mit deren Hilfe ein Speicherblock adressiert wird. Von Nachteil bei dieser bekannten Schaltungsanordnung ist, daß jeweils sämtliche von dem Programmzähler bzw. von dem Rechenwerk abgegebenen und einen Schwellwert überschreitenden Adressen für die Bildung von Kombinationsadressen ausgenutzt werden. Dies ist insofern von Nachteil, als es beim Arbeiten mit einer Zentraleinheit ohne weiteres vorkommen kann, daß lediglich die von einem Befehlszähler abgegebene Adresse unverändert zu verwenden ist. Im übrigen ist es bei der betrachteten bekannten Schaltungsanordnung von Nachteil, daß praktisch mit nur einem Konstant-Generator gearbeitet werden kann, wodurch der Umfang der Erweiterung des Adressierungsvolumens nicht ohne weiteres an unterschiedliche Verhältnisse angepaßt werden kann. Schließlich sind bei der betrachteten bekannten Schaltungsanordnung in jedem Falle sämtliche Adreßbits einer Grundadresse für die Bildung einer Kombinationsadresse ausgenutzt. Dies bedeutet aber, daß insgesamt nur ein starres, einheitliches Prinzip der Erweiterung des Adressierungsvolumens bei der bekannten Schaltungsanordnung vorliegt.

Der Erfindung liegt nun die Aufgabe zugrunde, einen Weg zu zeigen, wie unter Vermeidung der Nachteile der vorstehend betrachteten bekannten Schaltungsanordnung eine unterschiedlichen Bedürfnissen hinsichtlich des Aufrufens bzw. Abwickelns von Programmen, hinsichtlich der Übertragung von Daten und hinsichtlich eines direkten Speicherzugriffs gerechtwerdende Erweiterung des Adressierungsvolumens einer Zentraleinheit, insbesondere eines Mikroprozessors, erreicht wird.

Gelöst wird die vorstehend aufgezeigte Aufgabe bei einem Verfahren der eingangs genannten Art erfindungsgemäß dadurch, daß in Abhängigkeit vom Auftreten eines aufzurufende bzw. abzuwickelnde Programme betreffenden Befehls, eines die Übertragung bestimmter Daten betreffenden Befehls oder eines Direkt-Speicher-Zugriff-Befehls festgelegte zusätzliche Adreßbits bereitgestellt und mit zumindest einigen Bits der zugleich mit dem jeweiligen Befehl auftretenden Grundadresse zu einer Erweiterungsadresse zusammengefaßt werden, daß auf das Auftreten des ein aufzurufendes bzw. abzuwickelndes Programm betreffenden Befehls hin die zugleich mit diesem Befehl auftretende Grundadresse mit einer Mehrzahl von vorgegebenen Festwörtern verglichen wird und daß bei Ermittlung einer Übereinstimmung der zusammen mit einem ein aufzurufendes bzw. abzuwickelndes Programm betreffenden Befehl auftretenden Grundadresse mit einem der Festwörter die für das betreffende Festwort festgelegten bestimmten zusätzlichen Adreßbits für die genannte Bildung einer Erweiterungsadresse bereitgestellt werden.

Die Erfindung bringt den Vorteil mit sich, daß auf relativ einfache Weise eine unterschiedlichen Bedürfnissen hinsichtlich aufzurufender bzw. abzuwickelnder Programme, hinsichtlich der Übertragung bestimmter Daten bzw. hinsichtlich eines direkten Speicherzugriffs gerechtwerdende Erweiterung des Adressierungsvolumens einer Zentraleinheit, insbesondere eines Mikroprozessors ermöglicht ist.

Zur Durchführung des Verfahrens gemäß der Erfindung ist es zweckmäßig, eine Schaltungsanordnung zu verwenden, die dadurch gekennzeichnet ist, daß an einer die Grundadressen führenden Adreßbusleitung eine Anzahl von Registern mit ihrer jeweiligen Eingangsseite angeschlossen ist, daß die Register jeweils mit einem zusätzlichen Steuereingang entweder an einer gesonderten Steuerleitung zur Übermittlung eines entweder die Übertragung bestimmter Daten oder die Ansteuerung eines Direkt-Zugriffs-Speichers betreffenden Befehls oder am Ausgang eines Vergleichers angeschlossen sind, der in Abhängigkeit von einem ihm über eine weitere Steuerleitung zugeführten, ein aufzurufendes oder abzuwickelndes Programm betreffenden Befehl jeweils bei Feststellen einer Übereinstimmung der auf der Adreßbusleitung auftretenden Grundadresse mit wenigstens einer in angeschlossenen Festwortgebern fest vorgegebenen Adresse ein Steuersignal abgibt, daß durch ein Steuersignal gesteuert das zugehörige Register neben den Adreßbits der ihm eingangsseitig zugeführten Grundadresse zusätzliche Adreßbits unter Bildung einer Erweiterungsadresse mit dieser Grundadresse abgibt, und daß bei Nichtübereinstimmung der jeweils abgegebenen Grundadresse mit der jeweils fest vorgegebenen Adresse die jeweilige Grundadresse unverändert weitergebbar ist. Hierdurch ergibt sich der Vorteil eines besonders geringen schaltungstechnischen Aufwands für die Bildung von Erweiterungsadressen aus vom Befehlszähler abgegebenen Adressen, wobei nicht in jedem Fall sämtliche Bits der vom Befehlszähler abgegebenen Grundadressen für die Bildung von Erweiterungsadressen herangezogen werden müssen.

Die Grundadressen sind zweckmäßigerweise zur Adressierung eines ersten Speichers ausgenutzt, und die Erweiterungsadressen sind zur Adressierung von weiteren Speichern ausgenutzt. Dies ergibt in vorteilhafter Weise eine besonders einfache und übersichtliche Speicherstruktur. Dabei ist es auf einfache Weise möglich, in dem ersten Speicher gewisse Grundprogrammdaten zu speichern und in den weiteren Speichern die für die Ausführung von besonderen Operationen erforderlichen Programmdaten abzuspeichern.

Zweckmäßigerweise ist nach Ausführung des mit der jeweiligen Erweiterungsadresse verbundenen Vorgangs der durch die jeweils nächste Grundadresse bzw. Erweiterungsadresse bezeichnete Speicher adressierbar. Hierdurch ergibt sich der Vorteil, auch die weiteren Speicher in die Bildung von Erweiterungsadressen miteinbeziehen zu können.

Zweckmäßigerweise ist im Zuge des Auslesens von mehrere Wörter oder Bytes umfassenden Informationen aus einem adressierten Speicher während der Zeitspanne zwischen dem Auslesen zweier Wörter bzw. Bytes durch Abgabe eines Direkt-Speicher-Zugriffs-Befehls die jeweils gerade bereitstehende Grundadresse zusammen mit gesondert bereitzustellenden zusätzlichen Adreßbits zu einer Erweiterungsadresse für einen direkten Speicherzugriff erweiterbar. Das Auslesen weiterer Wörter bzw. Bytes aus dem vor Auftreten des betreffenden Direkt-Speicher-Zugriffs-Befehls angesteuerten Speicher ist nach Ausführung des direkten Speicherzugriffs fortsetzbar. Hierdurch ergibt sich der Vorteil, daß auf besonders einfache Weise auch Direkt-Speicher-Zugriffe ermöglicht sind, ohne daß dies zu einem erhöhten Steuerungsaufwand beim Auslesen von Informationen aus den Speichern führt.

Anhand einer Zeichnung wird die Erfindung nachstehend an einem Ausführungsbeispiel näher erläutert.

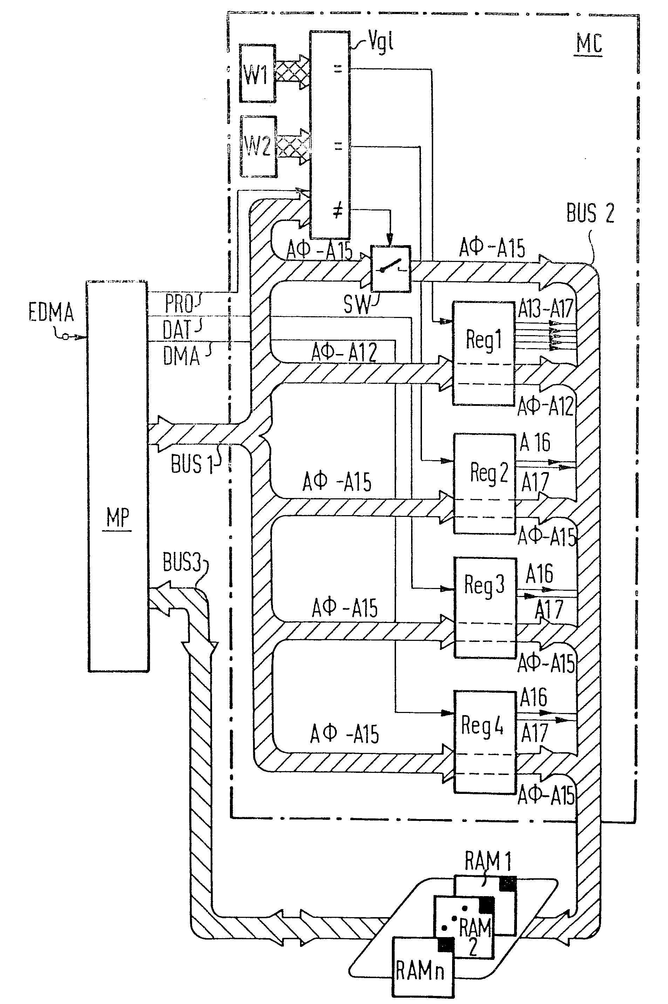

In der Zeichnung ist eine Schaltungsanordnung dargestellt, die im wesentlichen aus drei Teilen besteht: der eine Teil ist durch einen eine Zentraleinheit bildenden Mikroprozessor MP gegeben, der zweite Teil ist durch eine Adressierungs-Erweiterungsschaltung MC gegeben, und der dritte Teil ist durch eine Reihe von Speichern RAM1, RAM2 . . . RAMn gegeben. Bei diesen Speichern mag es sich um Lese-Schreib-Speicher handeln.

Der Mikroprozessor MP ist über eine mehrere Leitungen umfassende Adreßbusleitung BUS1 am Eingang der Adressierungs-Erweiterungsschaltung MC angeschlossen. Innerhalb dieser Adressierungs-Erweiterungsschaltung MC führt die Adreßbusleitung BUS1 zu den Eingängen von im vorliegenden Fall vier Registern Reg1, Reg2, Reg3, Reg4 hin. Während lediglich 13 Adreßleitungen (A0−A12) der Adreßbusleitung BUS1 zu dem Register Reg1 hinführen, führen 16 Adreßleitungen (A0−A15) zu den Eingangsseiten der übrigen Register Reg2, Reg3, Reg4 hin. Außerdem führen 16 Adreßleitungen (A0−A15) der Adreßbusleitung BUS1 zu einer Eingangsseite eines Vergleichers Vgl und zur Eingangsseite eines Schalters SW hin. Dieser Schalter SW mag so ausgebildet sein, daß er für jede Adreßleitung ein gesondertes Schalterelement aufweist.

Der Vergleicher Vgl ist mit weiteren Eingängen über eine entsprechende Anzahl von Leitungen an zwei Festwortgebern W1, W2 angeschlossen. Von diesen Festwortgebern W1, W2 werden dem Vergleicher Vgl fest vorgegebene Wörter zugeführt, die der Vergleicher Vgl mit den über die Adreßbusleitung BUS1 zugeführten Adressen vergleicht. Bei diesen Adressen handelt es sich um die Grundadressen, die über die Adreßbusleitung BUS1 abgegeben werden, und zwar insbesondere von dem auch als Programmzähler zu betrachtenden Befehlszählers PC des Mikroprozessors MP. Je nach Vergleichsergebnis gibt der Vergleicher VGl an einem seiner in der Zeichnung angedeuteten Ausgänge ein Ausgangssignal ab, das beispielsweise durch ein Binärsignal »H« gebildet sein mag. An dem mit ≠ bezeichneten Ausgang gibt der Vergleicher Vgl dann ein entsprechendes Ausgangssignal ab, wenn die ihm eingangsseitig zugeführte Grundadresse mit keinem der vorgegebenen Festwörter übereinstimmt. In diesem Fall ist der Schalter SW geschlossen, so daß dann über diesen Schalter die gerade zugeführten Adreßbits A0−A15 weitergegeben werden. Diese Adreßbits A0−A15 treten dann auf der ausgangsseitigen Adreßbusleitung BUS2 auf. Sie dienen dann zur Adressierung eines der in der Zeichnung angedeuteten Speicher, beispielsweise des Speichers RAM1. Über die weitere Busleitung BUS3 kann dann der Mikroprozessor MP mit dem gerade adressierten Speicher RAM1 für die Ausführung von Lese- und/oder Schreiboperationen in Verbindung treten. Damit stellt die Busleitung BUS3 eine Datenbusleitung dar.

Stellt der Vergleicher Vgl hingegen eine Übereinstimmung zwischen einer über die Adreßbusleitung gerade abgegebenen Grundadresse und einem der Festwörter fest, so wird an einem der beiden mit = bezeichneten Ausgänge dieses Vergleichers Vgl ein entsprechendes Ausgangssignal (Binärsignal »H«) auftreten. Der Schalter SW ist in diesem Fall geöffnet. Das an dem entsprechenden Ausgang des Vergleichers Vgl dabei auftretende Binärsignal »H« bewirkt entweder die Ansteuerung des Registers Reg1 oder des Registers Reg2. Im Falle des Registers Reg1 wird durch das betreffende Signal bewirkt, daß einmal die Adreßbits A0—A12 der gerade abgegebenen Grundadresse unverändert weitergegeben werden, also gewissermaßen durch das Register Reg1 durchgeschleust werden, und daß zusätzlich zu diesen Bits A0—A12 noch vier Adreßbits A13—A17 bereitgestellt werden, die zusammen mit den zuvor erwähnten Adreßbits der Grundadresse eine Erweiterungsadresse bilden. Diese Erweiterungsadresse wird über die abgehende Adreßbusleitung BUS2 an die im unteren Teil der Zeichnung dargestellten Speicher abgegeben und dort zur Adressierung beispielsweise des Speichers RAM2 herangezogen.

Im Falle der Ansteuerung des Registers Reg2 von einem Ausgang des Vergleichers Vgl werden die zu dem betreffenden Zeitpunkt vorhandenen Adreßbits A0—A15 unverändert durch dieses Register hindurchgeschleust, und zusätzlich gibt das Register Reg2 noch Adreßbits A16 und A17 ab. Diese Adreßbits A16, A17 werden mit den gerade erwähnten Adreßbits A0—A15 zu einer Erweiterungsadresse zusammengefaßt, mit deren Hilfe dann irgendeiner der vorgesehenen Speicher, beispielsweise der Speicher RAMn angesteuert wird.

Während das Wirksamsein der beiden Register Reg1, Reg2 von der Abgabe entsprechender Steuersignale von dem Vergleicher Vgl und dessen Wirksamsein von einem gesonderten Programmbefehl PRO abhängig ist, den der Mikroprozessor MP über eine entsprechend bezeichnete Leitung abgibt, — der Programmbefehl gibt die Zugehörigkeit der betreffenden Adresse zu einem Programm an — sind die beiden Register Reg3 und Reg4 durch einen sogenannten Datenbefehl DAT bzw. durch einen Direkt-Speicher-Zugriffs-Befehl DMA ansteuerbar; diese Befehle treten auf entsprechend bezeichneten Leitungen auf. Sie geben die Zugehörigkeit der jeweils zu bildenden Erweiterungsadresse an. Im Falle des Registers Reg3 werden durch das Auftreten eines derartigen Datenbefehls DAT die Adreßbits A0—A15 der gerade bereitgestellten Grundadresse durch das Register Reg3 hindurchgeschleust und zusammen mit zwei gesondert abzugebenden Adreßbits A16, A17 zu einer Erweiterungsadresse zusammengefaßt. Entsprechendes gilt auch für das Register Reg4 auf das Auftreten des Direkt-Speicher-Zugriffs-Befehls DMA.

Im Hinblick auf die in der Zeichnung dargestellten Register Reg1 bis Reg4 sei noch angemerkt, daß die Abgabe der zusätzlichen Adreßbits von diesen Registern in Anpassung an die vorhandene Speicherstruktur festgelegt sein wird. Dabei dürfte ersichtlich sein, daß gerade durch die Bereitstellung der Adreßbits ein Adressierungsvolumen für den Mikroprozessor MP bereitsteht, welches über jenes hinausgeht, das durch den Adressenvorrat des Befehls- bzw. Programmzählers PC gegeben ist. Um eine noch weitergehende Ausdehnung des Adressierungsvolumens vorzunehmen, könnte prinzipiell so vorgegangen sein, daß bei Ansteuerung bestimmter Speicherplätze in den einzelnen Speichern zusätzliche Kriterien für die Bereitstellung noch weiterer Adreßbits freigesetzt werden, um dann in entsprechender Weise noch größere Erweiterungsadressen zu bilden wie dies zuvor erläutert worden ist. In jedem Falle wird mit nur einem Mikroprozessor bzw. mit nur einer Zentraleinheit ausgekommen.

Im Zusammenhang mit der Ansteuerung des Registers Reg4 durch einen Direkt-Speicher-Zugriffs-Befehl sei noch angemerkt, daß das Wirksamwerden derartiger Befehle mit der Befehlsverarbeitung in dem Mikroprozessor MP so koordiniert sein wird, daß ein derartiger Befehl zwischen dem Auslesen zweier Wörter oder Bytes aus einem gerade adressierten Speicher ermöglicht ist. Im übrigen ist sicherzustellen, daß nach Ausführung des Direkt-Speicher-Zugriffs wieder der vor Auftreten eines derartigen Befehls begonnene Vorgang weiter abgewickelt wird. Zu diesem Zweck ist ein entsprechender Auslösebefehl einem Eingang EDMA des Mikroprozessors MP zuzuführen.

Abschließend sei noch angemerkt, daß die vorstehend erläuterte Schaltungsanordnung vorzugsweise im zentralen Steuerungsteil einer Fernschreib-Nebenstellenanlage eingesetzt werden kann, die somit eine einfache Möglichkeit bietet, hinsichtlich der Anzahl der an ihr angeschlossenen Fernschreibteilnehmerstellen oder Fernschreibleitungen oder Datenleitungen erweitert zu werden.

An dieser Stelle sei schließlich noch darauf hingewiesen, daß die erwähnte Erweiterbarkeit prinzipiell zwar durch Verwendung eines anderen Befehls- bzw. Programmzählers der Zentraleinheit erreicht werden könnte; dies setzt allerdings voraus, daß man Zugriff zu einem solchen Zähler hat. Gerade ein solcher Zugriff ist jedoch nicht immer möglich, jedenfalls dann nicht, wenn die Zentraleinheit durch einen Mikroprozessor gebildet ist.

**Patentansprüche**

1. Verfahren zur Erweiterung des Adressierungsvolumens einer Zentraleinheit, insbesondere eines Mikroprozessors, über den durch den Adressenvorrat eines vorgesehenen Befehlszählers gegebenen Grundadressenumfang hinaus, wobei zumindest eine Grundadresse der Zentraleinheit dazu herangezogen wird, die Abgabe zusätzlicher Adreßbits zu bewirken, aus denen zusammen mit den Adreßbits der betreffenden Grundadresse eine Erweiterungsadresse gebildet wird, dadurch gekennzeichnet, daß in Abhängigkeit vom Auftreten eines aufzurufende bzw. abzuwickelnde Programme betreffenden Befehls (PRO), eines die Übertragung bestimmter Daten betreffenden Befehls (DAT) oder eines Direkt-Speicher-Zugriff-Befehls (DMA) festgelegte zusätzliche Adreßbits (A13 bis A17; A16, A17) bereitgestellt und mit zumindest einigen Bits der zugleich mit dem jeweiligen Befehl auftretenden Grundadresse zu einer Erweiterungsadresse zusammengefaßt werden,

daß auf das Auftreten des ein aufzurufendes bzw. abzuwickelndes Programm betreffenden Befehls (PRO) hin die zugleich mit diesem Befehl (PRO) auftretende Grundadresse mit einer Mehrzahl von vorgegebenen Festwörtern (W1, W2) verglichen wird

und daß bei Ermittlung einer Übereinstimmung der zusammen mit einem ein aufzurufendes bzw. abzuwickelndes Programm betreffenden Befehl (PRO) auftretenden Grundadresse mit einem der Festwörter (W1, W2) die für das betreffende Festwort (W1, W2) festgelegten bestimmten zusätzlichen Adreßbits (A13 bis A17 bzw. A16, A17) für die genannte Bildung einer Erweiterungsadresse bereitgestellt werden.

2. Schaltungsanordnung zur Durchführung des Verfahrens nach Anspruch 1, dadurch gekennzeichnet, daß an einer die Grundadressen führenden Adreßbusleitung (BUS1) eine Anzahl von Registern (Reg1 bis Reg4) mit ihrer jeweiligen Eingangsseite angeschlossen ist, daß die Register (Reg1 bis Reg4) jeweils mit einem zusätzlichen Steuereingang entweder an einer gesonderten Steuerleitung zur Übermittlung eines entweder die Übertragung bestimmter Daten oder die Ansteuerung eines Direkt-Zugriffs-Speichers betreffenden Befehls oder am Ausgang eines Vergleichers (Vgl) angeschlossen sind, der in Abhängigkeit von einem ihm über eine weitere Steuerleitung zugeführten, ein aufzurufendes oder abzuwickelndes Programm betreffenden Befehl jeweils bei Feststellen einer Übereinstimmung der auf der Adreßbusleitung (BUS1) auftretenden Grundadresse mit wenigstens einer in angeschlossenen Festwortgebern fest vorgegebenen Adresse ein Steuersignal abgibt, daß durch ein Steuersignal gesteuert das zugehörige Register (Reg1, Reg2) neben den Adreßbits der ihm eingangsseitig zugeführten Grundadresse zusätzliche Adreßbits (z. B. A16, A17) unter Bildung einer Erweiterungsadresse mit dieser Grundadresse abgibt, und daß bei Nichtübereinstimmung der jeweils abgegebenen Grundadresse mit der jeweils fest vorgegebenen Adresse die jeweilige Grundadresse unverändert weitergebbar ist.

3. Schaltungsanordnung nach Anspruch 2, dadurch gekennzeichnet, daß die Grundadressen zur Adressierung eines ersten Speichers (RAM1) ausgenutzt sind und daß die Erweiterungsadressen zur Adressierung von weiteren Speichern (RAM2 bis RAMn) ausgenutzt sind.

4. Schaltungsanordnung nach Anspruch 2 oder 3, dadurch gekennzeichnet, daß nach Ausführung des mit der jeweiligen Erweiterungsadresse verbundenen Vorgangs der durch die jeweils nächste Grundadresse bzw. Erweiterungsadresse bezeichnete Speicher adressierbar ist.

5. Schaltungsanordnung nach einem der Ansprüche 2 bis 4, dadurch gekennzeichnet, daß im Zuge des Auslesens von mehrere Wörter oder Bytes umfassenden Informationen aus einem adressierten Speicher während der Zeitspanne zwischen dem Auslesen zweier Wörter bzw. Bytes durch Abgabe eines Direkt-Speicher-Zugriffs-Befehls (DMA) die jeweils gerade bereitstehende Grundadresse zusammen mit gesondert bereitzustellenden zusätzlichen Adreßbits (A16, A17) zu einer Erweiterungsadresse für einen direkten Speicherzugriff erweiterbar ist, und daß das Auslesen weiterer Wörter bzw. Bytes aus dem vor Auftreten des betreffenden Direkt-Speicher-Zugriffs-Befehls angesteuerten Speicher nach Ausführung des direkten Speicherzugriffs fortsetzbar ist.

## Claims

1. Process for extending the addressing capacity of a central unit, in particular of a microprocessor beyond the base address range represented by the address provision of a provided instruction counter, wherein at least one base address of the central unit is referred to in order to effect the emission of additional address bits from which together with the addres bits of the relevant base address is formed an extension address, characterised in that in dependence upon the occurrance of an instruction (PRO) relating to programmes to be called or, as the case may be, to be performed, of an instruction (DAT) relating to the transmission of particular data, or of a direct-store-access-instruction (DMA), determined additional address bits (A13 to A17; A16 to A17) are made available and combined with at least some bits of the base address which occurs simultaneously with the respective instruction, that following the occurrence of the instruction (PRO) relating to a programme to be called or, as the case may be, to be performed, the base address, which occurs simultaneously with this instruction (PRO), is compared with a plurality of predetermined fixed words (W1, W2), and that when consistency is ascertained ot the base address, which occurs simultaneously with an instruction (PRO) relating to a programme to be called or, as the case may be, to be performed, with one of the fixed words (W1, W2) the particular additional address bits (A13 to A17; A16 to A17) determined for the relevant fixed word (W1, W2) are made available for said formation of an extension address.

2. Circuit arrangement for the implementation of the process as claimed in claim 1, characterised in that via their respective input sides a number of registers (Reg1 to Reg4) are connected to an address bus line (BUS1) carrying the base addresses, that via an additional control input in each case, the registers (Reg1 to Reg4) are connected either to a separate control line in order to transmit an instruction relating either ot the transmission of particular data or to the control of a direct-access-store, or to the output of a comparator (Vgl) which in dependence upon an instruction which is supplied to the comparator by means of a further control line and which relates to a programme to be called or to be performed, emits a control signal when ascertainig consistency of the base address occurring on the address bus line (BUS1) with at least one address which is firmyl predetermined in connected fixed word generators, and that controlled by a control, in addition to the address bits of the base address supplied to the register at the input siede, the assigned register (Reg1, Reg2) emits additional address bits (e. g. A16, A17) forming an extension address with this base address, and that when the respectively emitted base address is inconsistent with the respectively firmyl predetermined address, the particular base address can be advanced in unchanged fashion.

3. Circuit arrangement as claimed in claim 2, characterised in that the base addresses are utilised in order to address a first store (RAM1) and that the extension addresses are utilised in order to address further stores (RAM2 to RAMn).

4. Circuit arrangement as claimed in claim 2 or 3, characterised in that following the performance of the operation associated with the particular extension address, the store signified by the respective next base address or, as the case may be, extension address is addressable.

5. Circuit arrangement as claimed in one of claims 2 to 4, characterised in that in the course of the read-out operation of items of information comprising a plurality of words or bytes from an addressed store, during the time interval between the read-out operation of two words or, as the case may be, bytes, by emission of a direct-store-access-instruction (DMA), the currently available base address together with additional address bits (A16, A17), which are to be made available separately, can be extended to form an extension address for a direct store access, and that the read-out operation of further words or, as the case may be, bytes from the store controlled prior to the occurrence of the relevant direct-store-access-instruction can be contienued after the performance of the direct store access.

**Revendications**

1. Procédé d'extension du volume d'adressage d'une unité centrale, en particulier d'un microprocesseur, au-delà de la capacité en adresses de base, donnée par la réserve d'adresses d'un compteur d'adresses prévu, au moins une adresse de base de l'unité centrale étant utilisée pour provoquer l'émission de bits d'adresses à partir desquels on forme, avec les bits d'adresses de l'adresse de base concernée, une adresse d'extension, caractérisé par le fait qu'en fonction de l'apparition d'une instruction (DAT) concernant la transmission de données déterminées ou d'une instruction d'accès direct à la mémoire (DMA), des bits d'adresses supplémentaires déterminées (A13 à A17; A16, A17) sont préparées et rassemblées, avec au moins quelques bits de l'adresse de base apparaissant en même temps que l'instruction concernée, en une adresse d'extension, qu'à l'apparition de l'instruction (PRO) que concerne un programme à appeler ou à développer, l'adresse de base qui apparaît en même temps que cette instruction (PRO), est comparée avec plusieurs parmi des mots fixes (W1, W2) donnés à l'avance et que lors de la détermination d'une concordance entre une adresse de base qui apparaît en même temps qu'une instruction (PRO) concernant un programme à appeler ou à développer, et l'un des mots fixes (W1, W2), les bits d'adresses supplémentaires déterminées et qui sont arrêtés par le mot fixe (W1, W2) concerné, sont préparés pour ladite formation d'une adresse d'extension.

2. Montage pour la mise en oeuvre du procédé selon la revendication 1, caractérisé par le fait qu'à une ligne de bus d'adresses (BUS1), transmettant les adresses de base, est relié un grand nombre de registres (Reg1 à Reg4), par leur côté d'entrée respectif, que les registres (Reg1 à Reg4) sont chacun reliés par une entrée de commande supplémentaire soit à une ligne de commande séparée pour déterminer soit une instruction concernant la transmission de données déterminées ou l'attaque d'une mémoire à accès direct, ou à la sortie d'un comparateur (Vg1) qui, en fonction d'une instruction que lui est appliquée par l'intermédiaire de la ligne de commande supplémentaire et qui concerne un programme à appeler ou à développer, émet, lors de chaque détermination d'une concordance entre l'adresse de base qui apparaît sur la ligne de bus d'adresses (BUS1) et au moins une adresse donnée à l'avance, de façon fixe, dans les générateurs de mots fixes qui sont branchés, un signal de commande, que sous la commande d'un signal de commande, le registre associé (Reg1, Reg2) émet, en plus du bit d'adresse de l'adresse de base qui lui est appliqué du côté entrée, des bits d'adresses supplémentaires (par exemple A16, A17), avec formation d'une adresse d'extension avec cette adresse de base, et que dans le cas de l'absence de concordance entre l'adresse de base qui a été émise et l'adresse donnée à l'avance de manière fixe, l'adresse de base concernée est susceptible d'être retransmise sans modification.

3. Montage selon la revendication 2, caractérisé par le fait que les adresses de base sont utilisées pour l'adressage d'une première mémoire (RAM1) et que les adresses d'extension sont utilisées pour l'adressage d'autres mémoires (RAM2 à RAMn).

4. Montage selon la revendication 2 ou 3, caractérisé par le fait qu'après exécution de l'opération qui est liée avec l'adresse d'extension concernée, la mémoire qui est désignée par l'adresse de base suivante ou l'adresse d'extension suivante, est susceptible d'être adressée.

5. Montage selon l'une des revendications 2 à 4, caractérisé par le fiat qu'au cours de la lecture dans une mémoire adressée d'informations comportant plusieurs mots ou octets, et pendant l'invervalle de temps entre la lecture de deux mots ou octets, l'adresse de base qui est précisément à disposition, prise en commun avec des bits d'adresses supplémentaires (A16, A17) qui sont spécialement à mettre à la disposition, est susceptible, par l'émission d'une instruction d'accès direct à la mémoire, d'être étendue à une adresse d'extension pour un accès direct à la mémoire, et que la lecture d'autres mots ou octets dans la mémoire que est commandée avant l'apparition de l'instruction concernée de l'accès direct à la mémoire, est susceptible d'être poursuivie, après l'exécution de l'accès direct à la mémoire.